# EUROPEAN PATENT SPECIFICATION

(11) **EP 4 391 439 B1**
(45) Date of publication and mention of the grant of the patent: **08.04.2026**
(21) Application number: 23218596.7
(22) Date of filing: 20.12.2023
(51) Int. Cl.: H04L 7/04

(54) **DETECTION SYSTEM FOR VEHICLE-MOUNTED ETHERNET LINK SYNCHRONIZATION SIGNAL**
DETEKTIONSSYSTEM FÜR FAHRZEUGMONTIERTES ETHERNETVERBINDUNGSSYNCHRONISATIONSSIGNAL
SYSTÈME DE DÉTECTION POUR SIGNAL DE SYNCHRONISATION DE LIAISON ETHERNET MONTÉ SUR VÉHICULE

(30) Priority: 20.12.2022 CN 202211640084
(43) Date of publication of application: 26.06.2024
(73) Proprietor: Motorcomm (Shanghai) Electronic Technology Co., Ltd., Shanghai 200120 (CN)
(72) Inventor: YAO, Saijie, Shanghai, 200120 (CN)
(74) Representative: Rossi, Ugo

(56) References cited:
- CN-A- 114 363 865
- US-B2- 8 559 462

## Description

### BACKGROUND OF THE INVENTION

### 1. Field of the Invention

The present invention relates to the technical field of vehicle-mounted Ethernet communication, particularly to a detection system for a vehicle-mounted Ethernet link synchronizing signal.

### 2. Description of the Related Art

Vehicle-mounted Ethernet is a novel local area network technology used to connect in-vehicle electronic control units (ECUs) via Ethernet. Unlike conventional Ethernet technology, which utilizes 4 pairs of unshielded twisted pairs to transmit data, vehicle-mounted Ethernet achieves data transfer rates of 100 Mb/s or even 1 Gb/s on a single pair of unshielded twisted pairs. Compared to conventional Ethernet, it is more adaptable to the automotive environment, meeting the automotive industry's requirements for high reliability, low electromagnetic radiation, low power consumption, bandwidth allocation, low latency, and synchronous real-time capabilities.

In existing technologies, for vehicle-mounted Ethernet device, there are different handshake modes depending on the parameters of each manufacturer and device. These modes include auto-negotiation mode and forced mode. To achieve better compatibility with different handshake protocols, Ethernet devices are typically configured with corresponding signal detection methods, to determine the communication mode that the remote device can adopt by detecting the corresponding signal.

However, in the actual implementation process, the inventor found that, with the development of vehicle-mounted Ethernet device and the iteration of communication standards, the communication speed and standards supported by vehicle-mounted Ethernet device may gradually expand from the original 100BASE-T 1, 1000BASE-T1 to 2.5G/5G/10GBASE-T1. With the expansion of communication protocols, the parallel detection process for synchronous signals has become increasingly complex, leading to the problem that the existing technology's solution of only parallel detection for the first and second types of signals is not effective.US8559462B2 refers to a synchronization signal detection apparatus. CN114363865A refers to a parallel synchronization method and equipment for vehicle-mounted Ethernet equipment.

### SUMMARY OF THE INVENTION

In response to the issues present in existing technologies, a detection system for vehicle-mounted Ethernet link synchronization signal is now provided.

The technical solution is as follows:
a detection system for vehicle-mounted Ethernet link synchronization signal, suitable for vehicle-mounted Ethernet device to determine synchronization signal sent by external device, comprising:
a signal characteristic judgment module, the signal characteristic judgment module generates a synchronization mode identifier according to signal characteristic of the synchronizing signal, the signal characteristic is periodic counting results by reading high levels of the synchronization signal within a certain period;
a rate judgment module, the rate judgment module generates a working rate identifier according to the synchronizing signal;
a synchronization module, wherein the synchronization module is respectively connected with the signal characteristic judgment module and the rate judgment module, and the synchronization module generates synchronization information for handshake between the vehicle-mounted Ethernet device and the external device according to the synchronization mode identifier and the working rate identifier and outputs the synchronization information;
the synchronization mode identifier comprises a continuous signal and a pulse signal; the rate judgment module further comprises a continuous signal detection module, and the continuous signal detection module is connected to the signal characteristic judgment module;
when the synchronization mode identifier indicates as the continuous signal, the continuous signal detection module directly outputs a pre-configured continuous signal pattern rate, which functions as the working rate identifier, to the synchronization module.

On the other hand, the signal characteristic judgment module comprises:
a timing module, the timing module generates a clock signal;
a counting module, the counting module is connected to the timing module and generates periodic counting results based on the input clock signal and synchronization signal to function as the signal characteristic;
a judgment module, the judgment module generates the synchronization mode identifier based on the signal characteristic.

On the other hand, the rate judgment module comprises:
a sampling module, the sampling module samples the synchronization signal to form a sampling data;
a decision module, the decision module generates a PN sequence based on the sampling data;
a detection module, the detection module is connected to the decision module and generates the working rate identifier based on the PN sequence.

On the other hand, the rate judgment module further comprises:
a gain control module, an input terminal of the gain control module receives the synchronization signal, and an output terminal of the gain control module is connected to an input terminal of the sampling module;
the gain control module generates a gain parameter based on a signal amplitude of the synchronization signal and a pre-set sampling range corresponding to the sampling range of the sampling module;
the gain control module adjusts a gain value of the synchronization signal using the gain parameter, and outputs the gain value to the sampling module.

On the other hand, the rate judgment module further comprises:
a sampling clock generation module, the sampling clock generation module generates a sampling clock signal;
a clock recovery module, the clock recovery module is connected to the sampling clock generation module, and the clock recovery module adjusts the sampling clock signal based on a pre-configured optimal sampling parameter so as to generate an adjusted clock signal;
the sampling module receives the adjusted clock signal, and samples the synchronization signal based on the adjusted clock signal to obtain the sampling data.

On the other hand, the rate judgment module further comprises:
an equalization module, an input terminal of the equalization module is connected to the sampling module, and an output terminal of the equalization module is connected to the decision module;
the equalization module obtains the sampling data, and eliminates an inter-symbol interference from the sampling data to output the sampling data to the decision module.

On the other hand, the equalization module comprises:
a forward equalizer, the forward equalizer is connected to the sampling module, the forward equalizer obtains the sampling data, and the forward equalizer eliminates forward symbol interference from the sampling data to generate an intermediate equalized data;
a decision feedback filter, the decision feedback filter is connected to the forward equalizer, the decision feedback filter eliminates backward symbol interference from the intermediate equalized data to output the intermediate equalized data which functions as the sampling data with the inter-symbol interference eliminated.

On the other hand, the continuous signal detection module is also connected to the sampling module, the decision module, and the detection module respectively;
when the synchronization mode identifier indicates as a continuous signal, the continuous signal detection module further controls the sampling module, the decision module, and the detection module to cease processing the synchronization signal.

On the other hand, the detection module comprises:
a reference signal generation module, the reference signal generation module sequentially generates pre-configured reference sequence signals;
the reference sequence signals correspond to the synchronization signal under different working rates of the Ethernet device respectively,
an auto-correlation module, the auto-correlation module is connected to the reference signal generation module and the decision module respectively, the auto-correlation module performs sliding auto-correlation processing on the reference sequence signals and the PN sequence to obtain an auto-correlation result;
a detection judgment module, the detection judgment module is connected to the reference signal generation module and the auto-correlation module respectively, the detection judgment module determines whether the working rate corresponding to the PN sequence is obtained based on the auto-correlation result,
if the working rate is obtained, the detection judgment module generates the working rate identifier based on the working rate;
if the working rate is not obtained, the detection judgment module controls the reference signal generation module to generate new reference sequence signals.

The method has the beneficial effects that aiming at the problem that a parallel detection scheme in the prior art is poor in effect, the signal characteristic judgment module and the rate judgment module are respectively constructed in the detection system, and the synchronous signal is judged based on the working mode and the working rate corresponding to the signal characteristic, so that a good detection effect on a plurality of synchronization signal is realized.

### BRIEF DESCRIPTION OF THE DRAWINGS

Referring to the accompanying drawings for a more comprehensive description of the embodiments of the present invention. However, the accompanying drawings are for illustration and explanation purposes only and do not limit the scope of the invention.
Fig. 1 is an overall schematic diagram of an embodiment of the present invention;
Fig. 2 is a schematic diagram of a signal characteristic judgment module in an embodiment of the present invention;
Fig. 3 is a schematic diagram of a rate judgment module in an embodiment of the present invention;
Fig. 4 is a schematic diagram of a gain control module in an embodiment of the present invention;
Fig. 5 is a schematic diagram of a clock recovery module in an embodiment of the present invention;
Fig. 6 is a schematic diagram of an equalization module in an embodiment of the present invention;
Fig. 7 is a schematic diagram of a sub-module of the equalization module in an embodiment of the present invention;
Fig. 8 is a schematic diagram of a continuous signal detection module in an embodiment of the present invention;
Fig. 9 is a schematic diagram of a detection module in an embodiment of the present invention.

### DETAILED DESCRIPTION

Below, the technical solutions in the embodiments of the present invention will be described clearly and comprehensively in conjunction with the accompanying drawings. It is obvious that the described embodiments are only a part of the embodiments of the present invention, not all of them. Based on the embodiments of the present invention, all other embodiments obtained by those skilled in the art without exercising creative labor are within the scope of protection of the present invention.

It should be noted that, in non-conflicting situations, embodiments in the present invention and features in these embodiments can be combined with each other.

The following, in conjunction with the drawings and specific embodiments, provides further explanation of the present invention but is not intended to limit the scope of the invention.

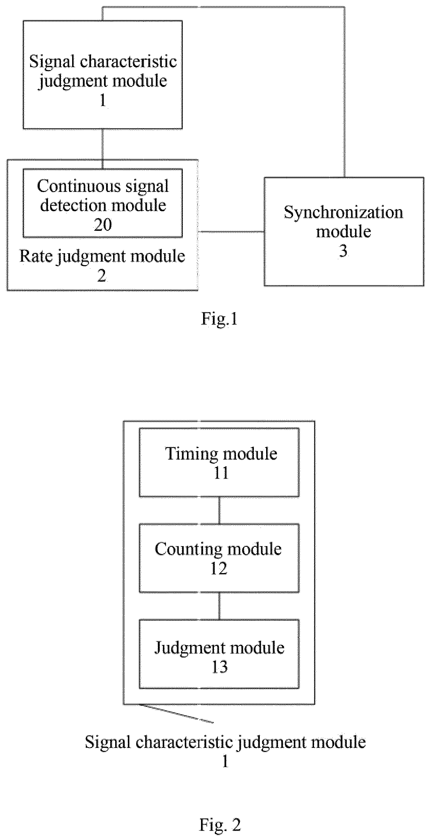

The invention includes:
a detection system for vehicle-mounted Ethernet link synchronization signal, suitable for vehicle-mounted Ethernet device to determine synchronization signal sent by external device, as shown in Fig. 1, comprising:
a signal characteristic judgment module 1, the signal characteristic judgment module 1 generates a synchronization mode identifier according to the signal characteristic of the synchronizing signal;
a rate judgment module 2, the rate judgment module 2 generates a working rate identifier according to the synchronizing signal;
a synchronization module 3, wherein the synchronization module 3 is respectively connected with the signal characteristic judgment module 1 and the rate judgment module 2, and the synchronization module 3 generates synchronization information for handshake between the vehicle-mounted Ethernet device and the external device according to the synchronization mode identifier and the working rate identifier and outputs the synchronization information;
the synchronization mode identifier comprises a continuous signal and a pulse signal; the rate judgment module 2 further comprises a continuous signal detection module 20, and the continuous signal detection module 20 is connected to the signal characteristic judgment module 1;
when the synchronization mode identifier indicates as the continuous signal, the continuous signal detection module 20 directly outputs a pre-configured continuous signal pattern rate, which functions as the working rate identifier, to the synchronization module 3.

Specifically, in response to the problem of poor detection effectiveness of multiple vehicle Ethernet synchronization signal using parallel synchronization signal detection methods in the prior art, in this embodiment, a signal characteristic judgment module 1 is added to the detection system to judge the signal characteristic of the synchronization signal, thereby determining the working mode corresponding to part of the synchronization signal to function as the synchronization mode identifier. Additionally, a rate judgment module 2 further detects the synchronization signal to determine the working rate identifier corresponding to the synchronization signal. When both the synchronization mode identifier and the working rate identifier are obtained, the synchronization module 3 can obtain the actual working mode corresponding to the synchronization signal through table matching, and generate synchronization information for output, achieving a better process of detecting and judging the synchronization signal, and achieving good detection effectiveness of signal for various working modes such as 100BASE-T1, 1000BASE-T1, 2.5G/5G/10GBASE-T1.

In an embodiment, as shown in Fig. 2, the signal characteristic judgment module 1 comprises:
a timing module 11, the timing module 11 generates a clock signal;
a counting module 12, the counting module 12 is connected to the timing module 11 and generates periodic counting results based on the input clock signal and synchronization signal to function as the signal characteristic;
a judgment module 13, the judgment module 13 generates the synchronization mode identifier based on the signal characteristic.

Specifically, in response to the problem of poor detection effectiveness of multiple vehicle Ethernet synchronization signal using parallel synchronization signal detection methods in the prior art, the inventor further studied the synchronization signal under various working modes of vehicle-mounted Ethernet and found that only when the vehicle-mounted Ethernet device operates under the 100BASE-T1 standard, the signal characteristic of its synchronization signal exhibits a set of continuous signals, while under other standards, it exhibits pulse signals with different periods. Therefore, in this embodiment, by selecting and setting a timing module 11 and a counting module 12, the high levels of the synchronization signal within a certain period are read, and the counting result of the period is generated as the signal characteristic, thereby achieving better judgement effectiveness for the synchronization signal under the 100BASE-T1 standard and generating the corresponding synchronization mode identifier.

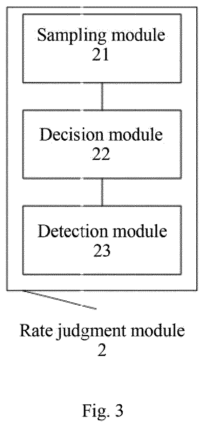

In an embodiment, as shown in Fig. 3, the rate judgment module 2 comprises:
a sampling module 21, the sampling module 21 samples the synchronization signal to form a sampling data;
a decision module 22, the decision module 22 generates a PN sequence based on the sampling data;
a detection module 23, the detection module 23 is connected to the decision module 22 and generates the working rate identifier based on the PN sequence.

Specifically, in response to the problem of poor detection effectiveness of multiple vehicle Ethernet synchronization signal using parallel synchronization signal detection methods in the prior art, in this embodiment, the sampling module 21, decision module 22, and detection module 23 are sequentially connected to achieve the sampling of the synchronization signal, thereby obtaining the sampling data. Further, the sampling data is subjected to judgement to obtain the PN sequence actually transmitted by the remote device, and then the PN sequence is detected to determine the working rate adopted by the remote device to function as the working rate identifier, thereby achieving better detection performance of the synchronization signal at different rates.

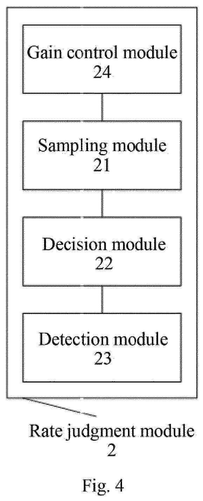

**In** an embodiment, as shown in Fig. 4, the rate judgment module 2 further comprises:
a gain control module 24, an input terminal of the gain control module 24 receives the synchronization signal, and an output terminal of the gain control module 24 is connected to an input terminal of the sampling module 1;
the gain control module 24 generates a gain parameter based on a signal amplitude of the synchronization signal and a pre-set sampling range corresponding to the sampling range of the sampling module 21;
the gain control module 24 adjusts a gain value of the synchronization signal using the gain parameter, and outputs the gain value to the sampling module.

Specifically, in the actual vehicle-mounted environment, factors such as transmission medium, environment, and remote device models can affect the gain value of the synchronization signal, causing it to deviate from the sampling range of sampling module 21. **In** this embodiment, a gain control module 24 is further added to the front stage of sampling module 21. This gain control module 24 can determine whether the synchronization signal meets the sampling range of the sampling module 21 based on its signal amplitude. When the signal amplitude is below the sampling range, positive gain parameters are added, and when the signal amplitude is above the sampling range, negative gain parameters are added to process the synchronization signal. This avoids the problem of inaccurate sampling caused by the synchronization signal deviating from the normal sampling range.

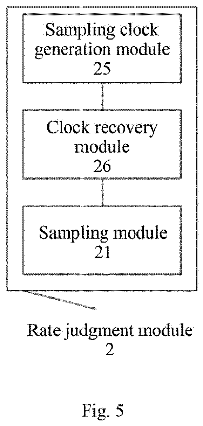

**In** an embodiment, as shown in Fig. 5, the rate judgment module 2 further comprises:
a sampling clock generation module 25, the sampling clock generation module 25 generates a sampling clock signal;
a clock recovery module 26, the clock recovery module 26 is connected to the sampling clock generation module 25, and the clock recovery module 26 adjusts the sampling clock signal based on a pre-configured optimal sampling parameter so as to generate an adjusted clock signal;
the sampling module 21 receives the adjusted clock signal, and samples the synchronization signal based on the adjusted clock signal to obtain the sampling data.

Specifically, to achieve better sampling performance for the synchronization signal, in this embodiment, a sampling clock generation module 25 is further configured in the rate judgment module 2 to generate a sampling clock signal. A clock recovery module 26 is used to adjust the sampling clock signal, so that the clock signal input to the sampling module 21 remains near the optimal sampling point of the sampling module 21, thereby achieving better sampling performance.

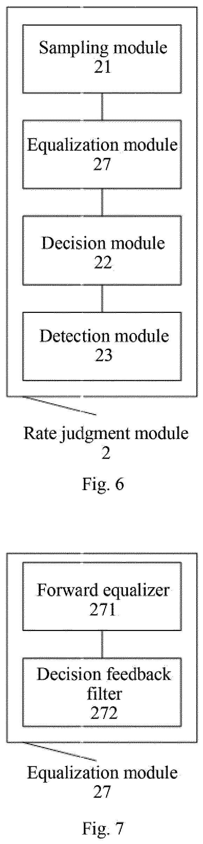

**In** an embodiment, as shown in Fig. 6, the rate judgment module 2 further comprises:
an equalization module 27, an input terminal of the equalization module 27 is connected to the sampling module 21, and an output terminal of the equalization module 27 is connected to the decision module 22;
the equalization module 27 obtains the sampling data, and eliminates an inter-symbol interference from the sampling data to output the sampling data to the decision module 22.

Specifically, to address the issue of inter-symbol interference in the synchronization signal in the actual vehicle-mounted environment, in this embodiment, an equalization module 27 is further added between the sampling module 21 and the decision module 22. The equalization module 27 is used to eliminate inter-symbol interference in the sampling data to output the sampling data to the decision module 22, thereby enabling subsequent modules to achieve better processing performance.

In an embodiment, as shown in Fig. 7, the equalization module 27 comprises:
a forward equalizer 271, the forward equalizer 271 is connected to the sampling module 21, the forward equalizer 271 obtains the sampling data, and the forward equalizer eliminates forward symbol interference from the sampling data to generate an intermediate equalized data;
a decision feedback filter 272, the decision feedback filter 272 is connected to the forward equalizer 271, the decision feedback filter eliminates backward symbol interference from the intermediate equalized data to output the intermediate equalized data which functions as the sampling data with the inter-symbol interference eliminated.

Specifically, to address the issue of inter-symbol interference in the synchronization signal in the actual vehicle-mounted environment, in this embodiment, the forward equalizer 271 is set up to eliminate forward symbol interference in the sampling data. It is combined with the decision feedback filter 272 to eliminate backward symbol interference, thereby achieving better elimination of inter-symbol interference.

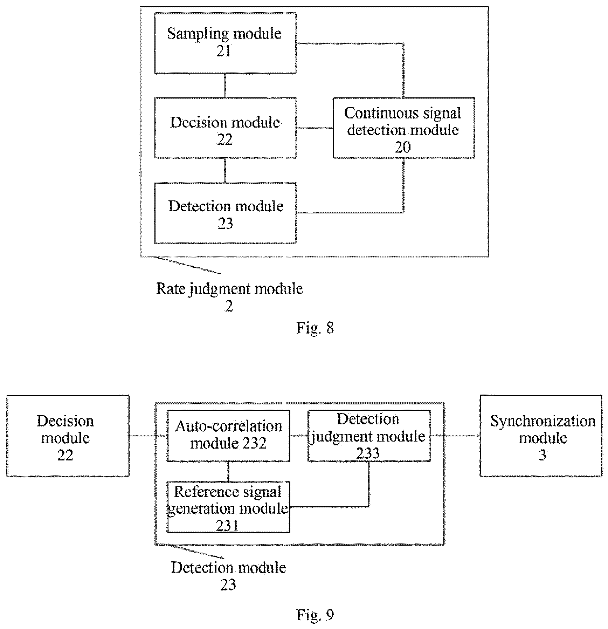

In an embodiment, as shown in Fig. 8, the continuous signal detection module 20 is also connected to the sampling module 21, the decision module 22, and the detection module 23 respectively;
when the synchronization mode identifier indicates as a continuous signal, the continuous signal detection module 20 further controls the sampling module 21, the decision module 22, and the detection module 23 to cease processing the synchronization signal.

Specifically, to achieve faster processing efficiency, in this embodiment, a continuous signal detection module 20 is further added to the rate judgement module 2. This continuous signal detection module 20 detects the synchronous mode identifier output by the signal characteristic judgment module 1, and when the synchronization mode identifier indicates as a continuous signal, i.e., indicating that the synchronization signal corresponds to the synchronization signal of 100BASE-T1, it directly outputs a 100M rate, which functions as the working rate identifier, to the synchronization module 3. It also controls the sampling module 21, decision module 22, and detection module 23 to cease sampling the synchronization signal, thereby improving processing efficiency.

In an embodiment, as shown in Fig. 9, the detection module 23 comprises:
a reference signal generation module 231, the reference signal generation module 231 sequentially generates pre-configured reference sequence signals;
the reference sequence signals correspond to the synchronization signal under different working rates of the Ethernet device respectively,
an auto-correlation module 232, the auto-correlation module 232 is connected to the reference signal generation module 231 and the decision module 22 respectively, the auto-correlation module 232 performs sliding auto-correlation processing on the reference sequence signals and the PN sequence to obtain an auto-correlation result;
a detection judgment module 233, the detection judgment module 233 is connected to the reference signal generation module 231 and the auto-correlation module 232 respectively, the detection judgment module 232 determines whether the working rate corresponding to the PN sequence is obtained based on the auto-correlation result,
if the working rate is obtained, the detection judgment module 233 generates the working rate identifier based on the working rate;
if the working rate is not obtained, the detection judgment module 233 controls the reference signal generation module to generate new reference sequence signals.

Specifically, to achieve better detection performance for the working rates of various synchronization signals, in this embodiment, a reference signal generation module 231 is further set up in the detection module to generate reference sequence signals corresponding to synchronization signals with different rates. The PN sequence and reference sequence signals are subjected to sliding auto-correlation processing by the auto-correlation module 232, and then they are judged by the detection judgment module 233 until a matching reference sequence signal is found, thereby achieving better detection process for the working rate.

## Claims

1. A detection system for vehicle-mounted Ethernet link synchronization signal, suitable for vehicle-mounted Ethernet device to determine synchronization signal sent by external device, comprising:
a signal characteristic judgment module (1), the signal characteristic judgment module (1) configured to generate a synchronization mode identifier according to signal characteristic of the synchronizing signal, the signal characteristic being periodic counting results by reading high levels of the synchronization signal within a certain period;
a rate judgment module (2), the rate judgment module (2) configured to generate a working rate identifier according to the synchronizing signal;
a synchronization module (3), wherein the synchronization module (3) is respectively connected with the signal characteristic judgment module (1) and the rate judgment module (2), and the synchronization module (3) is configured to generate synchronization information for handshake between the vehicle-mounted Ethernet device and the external device according to the synchronization mode identifier and the working rate identifier and to output the synchronization information;
the synchronization mode identifier comprises a continuous signal and a pulse signal;
the rate judgment module (2) further comprises a continuous signal detection module (20), and the continuous signal detection module (20) is connected to the signal characteristic judgment module (1);
when the synchronization mode identifier indicates as the continuous signal, the continuous signal detection module (20) is configured to directly output a pre-configured continuous signal pattern rate, which functions as the working rate identifier, to the synchronization module (3).

2. The detection system of claim 1, wherein the signal characteristic judgment module (1) comprises:
a timing module (11), configured to generate a clock signal;
a counting module (12), the counting module (12) is connected to the timing module (11) and is configured to generate periodic counting results based on the input clock signal and synchronization signal to function as the signal characteristic;
a judgment module (13), configured to generate the synchronization mode identifier based on the signal characteristic.

3. The detection system of claim 1, wherein the rate judgment module (2) comprises:
a sampling module (21), configured to sample the synchronization signal to form a sampling data;
a decision module (22), configured to generate a PN sequence based on the sampling data;
a detection module (23), the detection module (23) is connected to the decision module (22) and is configured to generate the working rate identifier based on the PN sequence.

4. The detection system of claim 3, wherein the rate judgment module (2) further comprises:
a gain control module (24), an input terminal of the gain control module configured to receive the synchronization signal, and an output terminal of the gain control module (24) is connected to an input terminal of the sampling module (1);
the gain control module (24) configured to generate a gain parameter based on a signal amplitude of the synchronization signal and a pre-set sampling range corresponding to the sampling range of the sampling module (21);
the gain control module (24) configured to adjust a gain value of the synchronization signal using the gain parameter, and to output the gain value to the sampling module.

5. The detection system of claim 3, wherein the rate judgment module (2) further comprises:
a sampling clock generation module (25), configured to generate a sampling clock signal;
a clock recovery module (26), the clock recovery module (26) is connected to the sampling clock generation module (25), and is configured to adjust the sampling clock signal based on a pre-configured optimal sampling parameter so as to generate an adjusted clock signal;
the sampling module (21) configured to receive the adjusted clock signal, and to sample the synchronization signal based on the adjusted clock signal to obtain the sampling data.

6. The detection system of claim 1, wherein the rate judgment module (2) further comprises:
an equalization module (27), an input terminal of the equalization module (27) is connected to the sampling module (21), and an output terminal of the equalization module (27) is connected to the decision module (22);
the equalization module (27) configured to obtain the sampling data, and to eliminate an inter-symbol interference from the sampling data to output the sampling data to the decision module (22).

7. The detection system of claim 6, wherein the equalization module (27) comprises:
a forward equalizer (271), the forward equalizer (271) is connected to the sampling module (21) and is configured to obtain the sampling data, and the forward equalizer eliminates forward symbol interference from the sampling data to generate an intermediate equalized data;
a decision feedback filter (272), the decision feedback filter (272) is connected to the forward equalizer (271) and is configured to eliminate backward symbol interference from the intermediate equalized data to output the intermediate equalized data which functions as the sampling data with the inter-symbol interference eliminated.

8. The detection system of claim 3, wherein the continuous signal detection module (20) is also connected to the sampling module (21), the decision module (22), and the detection module (23) respectively;
when the synchronization mode identifier indicates as a continuous signal, the continuous signal detection module (20) is further configured to control the sampling module (21), the decision module (22), and the detection module (23) to cease processing the synchronization signal.

9. The detection system of claim 3, wherein the detection module (23) comprises:
a reference signal generation module (231), configured to sequentially generate pre-configured reference sequence signals;
the reference sequence signals correspond to the synchronization signal under different working rates of the Ethernet device respectively,
an auto-correlation module (232), the auto-correlation module (232) is connected to the reference signal generation module (231) and the decision module (22) respectively, and is configured to perform sliding auto-correlation processing on the reference sequence signals and the PN sequence to obtain an auto-correlation result;
a detection judgment module (233), the detection judgment module (233) is connected to the reference signal generation module (231) and the auto-correlation module (232) respectively, the detection judgment module (233) configured to determine whether the working rate corresponding to the PN sequence is obtained based on the auto-correlation result,
if the working rate is obtained, the detection judgment module (233) is configured to generate the working rate identifier based on the working rate;
if the working rate is not obtained, the detection judgment module (233) is configured to control the reference signal generation module to generate new reference sequence signals.

## Patentansprüche

1. Detektionssystem für fahrzeugmontiertes Ethernetverbindungssynchronisationssignal, das für eine fahrzeugmontierte Ethernetvorrichtung geeignet ist, um ein von einer externen Vorrichtung gesendetes Synchronisationssignal zu bestimmen, umfassend:
ein Signalmerkmalsbeurteilungsmodul (1), wobei das Signalmerkmalsbeurteilungsmodul (1) ausgelegt ist, um eine Synchronisationsmoduskennung gemäß dem Signalmerkmal des Synchronisationssignals zu generieren, wobei es sich bei dem Signalmerkmal um periodische Zählergebnisse durch Erfassen hoher Pegel des Sychronisationssignals in einem bestimmten Zeitraum handelt;
ein Ratenbeurteilungsmodul (2), wobei das Ratenbeurteilungsmodul (2) ausgelegt ist, um eine Betriebsratenkennung gemäß dem Synchronisationssignal zu generieren;
ein Synchronisationsmodul (3), wobei das Synchronisationsmodul (3) jeweils mit dem Signalmerkmalsbeurteilungsmodul (1) und dem Ratenbeurteilungsmodul (2) verbunden ist und das Synchronisationsmodul (3) ausgelegt ist, um Synchronisationsinformationen für einen Handshake zwischen der fahrzeugmontierten Ethernetvorrichtung und der externen Vorrichtung gemäß der Synchronsationsmoduskennung und der Betriebsratenkennung zu generieren und die Synchronisationsinformationen auszugeben,
wobei die Synchronisationsmoduskennung ein Dauersignal und ein Impulssignal umfasst,
wobei das Ratenbeurteilungsmodul (2) ferner ein Dauersignaldetektionsmodul (20) umfasst und das Dauersignaldetektionsmodul (20) mit dem Signalmerkmalsbeurteilungsmodul (1) verbunden ist,
wobei das Dauersignaldetektionsmodul (20), wenn die Synchronisationsmoduskennung das Dauersignal angibt, ausgelegt ist, um an das Synchronisationsmodul (3) direkt eine vorkonfigurierte Dauersignalmusterrate auszugeben, die als Betriebsratenkennung fungiert.

2. Detektionssystem nach Anspruch 1, wobei das Signalmerkmalsbeurteilungsmodul (1) Folgendes umfasst:
ein Timing-Modul (11), das ausgelegt ist, um ein Taktsignal zu generieren;
ein Zählmodul (12), wobei das Zählmodul (12) mit dem Timing-Modul (11) verbunden ist und ausgelegt ist, um periodische Zählergebnisse basieren auf dem Eingangstaktsignal und dem Synchronisationssignal zu generieren, um als Signalmerkmal zu fungieren;
ein Beurteilungsmodul (13), das ausgelegt ist, um die Synchronisationsmoduskennung basierend auf dem Signalmerkmal zu generieren.

3. Detektionssystem nach Anspruch 1, wobei das Ratenbeurteilungsmodul (2) Folgendes umfasst:
ein Abtastmodul (21), das ausgelegt ist, um das Synchronisationssignal abzutasten, um Abtastdaten zu bilden;
ein Entscheidungsmodul (22), das ausgelegt ist, um eine PN-Sequenz basierend auf den Abtastdaten zu generieren;
ein Detektionsmodul (23), wobei das Detektionsmodul (23) mit dem Entscheidungsmodul (22) verbunden ist und ausgelegt ist, um die Betriebsratenkennung basierend auf der PN-Sequenz zu generieren.

4. Detektionssystem nach Anspruch 3, wobei das Ratenbeurteilungsmodul (2) ferner Folgendes umfasst:
ein Verstärkungsregelungsmodul (24), wobei ein Eingangsanschluss des Verstärkungsregelungsmoduls ausgelegt ist, um das Synchronisationssignal zu empfangen, und ein Ausgangsanschluss des Verstärkungsregelungsmoduls (24) mit einem Eingangsanschluss des Abtastmoduls (1) verbunden ist,
wobei das Verstärkungsregelungsmodul (24) ausgelegt ist, um einen Verstärkungsparameter basierend auf einer Signalamplitude des Synchronisationssignals und einem voreingestellten Abtastbereich entsprechend dem Abtastbereich des Abtastmoduls (21) zu generieren,
wobei das Verstärkungsregelungsmodul (24) ausgelegt ist, um einen Verstärkungswert des Synchronisationssignals unter Nutzung des Verstärkungsparameters anzupassen und den Verstärkungswert an das Abtastmodul auszugeben.

5. Detektionssystem nach Anspruch 3, wobei das Ratenbeurteilungsmodul (2) ferner Folgendes umfasst:
ein Abtasttaktgenerierungsmodul (25), das ausgelegt ist, um ein Abtasttaktsignal zu generieren;
ein Taktrückgewinnungsmodul (26), wobei das Taktrückgewinnungsmodul (26) mit dem Abtasttaktgenerierungsmodul (25) verbunden ist und ausgelegt ist, um das Abtasttaktsignal basierend auf einem vorkonfigurierten optimalen Abtastparameter anzupassen, sodass ein angepasstes Taktsignal generiert wird,
wobei das Abtastmodul (21) ausgelegt ist, um das angepasste Taktsignal zu empfangen und das Synchronisationssignal basierend auf dem angepassten Taktsignal abzutasten, um die Abtastdaten zu erhalten.

6. Detektionssystem nach Anspruch 1, wobei das Ratenbeurteilungsmodul (2) ferner Folgendes umfasst:
ein Entzerrungsmodul (27), wobei ein Eingangsanschluss des Entzerrungsmoduls (27) mit dem Abtastmodul (21) verbunden ist und ein Ausgangsanschluss des Entzerrungsmoduls (27) mit dem Entscheidungsmodul (22) verbunden ist,
wobei das Entzerrungsmodul (27) ausgelegt ist, um die Abtastdaten zu erhalten und eine Intersymbolinterferenz aus den Abtasttaten zu beseitigen, um die Abtastdaten an das Entscheidungsmodul (22) auszugeben.

7. Detektionssystem nach Anspruch 6, wobei das Entzerrungsmodul (27) Folgendes umfasst:
einen Vorwärtsentzerrer (271), wobei der Vorwärtsentzerrer (271) mit dem Abtastmodul (21) verbunden ist und ausgelegt ist, um die Abtastdaten zu erhalten, und der Vorwärtsentzerrer eine Vorwärtssymbolinterferenz aus den Abtastdaten beseitigt, um entzerrte Zwischendaten zu generieren;
einen Entscheidungsrückkopplungsfilter (272), wobei der Entscheidungsrückkopplungsfilter (272) mit dem Vorwärtsentzerrer (271) verbunden ist und ausgelegt ist, um eine Rückwärtssymbolinterferenz aus den entzerrten Zwischendaten zu beseitigen, um die entzerrten Zwischendaten auszugeben, die als Abtastdaten mit beseitigter Intersymbolinterferenz fungieren.

8. Detektionssystem nach Anspruch 3, wobei das Dauersignaldetektionsmodul (20) auch jeweils mit dem Abtastmodul (21), dem Entscheidungsmodul (22) und dem Detektionsmodul (23) verbunden ist,
wobei das Dauersignaldetektionsmodul (20), wenn die Synchronisationsmoduskennung ein Dauersignal angibt, ferner ausgelegt ist, um das Abtastmodul (21), das Entscheidungsmodul (22) und das Detektionsmodul (23) so zu steuern, dass die Verarbeitung des Synchronisationssignals beendet wird.

9. Detektionssystem nach Anspruch 3, wobei das Detektionsmodul (23) Folgendes umfasst:
ein Referenzsignalgenerierungsmodul (231), das ausgelegt ist, um nacheinander vorkonfigurierte Referenzsequenzsignale zu generieren,
wobei die Referenzsequenzsignale dem Synchronisationssignal jeweils bei unterschiedlichen Betriebsraten der Ethernetvorrichtung entsprechen;
ein Autokorrelationsmodul (232), wobei das Autokorrelationsmodul (232) jeweils mit dem Referenzsignalgenerierungsmodul (231) und dem Entscheidungsmodul (22) verbunden ist und ausgelegt ist, um eine gleitende Autokorrelationsverarbeitung an den Referenzsequenzsignalen und der PN-Sequenz durchzuführen, um ein Autokorrelationsergebnis zu erhalten;
ein Detektionsbeurteilungsmodul (233), wobei das Detektionsbeurteilungsmodul (233) jeweils mit dem Referenzsignalgenerierungsmodul (231) und dem Autokorrelationsmodul (232) verbunden ist, wobei das Detektionsbeurteilungsmodul (233) ausgelegt ist, um zu bestimmen, ob die der PN-Sequenz entsprechende Betriebsrate basierend auf dem Autokorrelationsergebnis erhalten wird,
wobei das Detektionsbeurteilungsmodul (233), wenn die Betriebsrate erhalten wird, ausgelegt ist, um die Betriebsratenkennung basierend auf der Betriebsrate zu generieren,
wobei das Detektionsbeurteilungsmodul (233), wenn die Betriebsrate nicht erhalten wird, ausgelegt ist, um das Referenzsignalgenerierungsmodul zu steuern, um neue Referenzsequenzsignale zu generieren.

## Revendications

1. Système de détection du signal de synchronisation d'une liaison Ethernet embarquée, permettant à un dispositif Ethernet embarqué de déterminer un signal de synchronisation envoyé par un dispositif externe, comprenant:
un module de jugement de caractéristique de signal (1), le module de jugement de caractéristique de signal (1) étant configuré pour générer un identificateur de mode de synchronisation en fonction d'une caractéristique de signal du signal de synchronisation, la caractéristique de signal étant des résultats de comptage périodiques par lecture de niveaux élevés du signal de synchronisation au cours d'une certaine période;
un module de jugement de débit (2), le module de jugement de débit (2) étant configuré pour générer un identificateur de débit de travail en fonction du signal de synchronisation;
un module de synchronisation (3), dans lequel le module de synchronisation (3) est connecté respectivement au module de jugement de caractéristique de signal (1) et au module de jugement de débit (2), et le module de synchronisation (3) est configuré pour générer des informations de synchronisation pour l'échange entre le dispositif Ethernet embarqué et le dispositif externe en fonction de l'identificateur de mode de synchronisation et de l'identificateur de débit de travail, et pour émettre les informations de synchronisation;
l'identificateur de mode de synchronisation comprend un signal continu et un signal d'impulsion;
le module de jugement de débit (2) comprend en outre un module de détection de signal continu (20), et le module de détection de signal continu (20) est connecté au module de jugement de caractéristique de signal (1);
lorsque l'identificateur de mode de synchronisation indique qu'il s'agit du signal continu, le module de détection de signal continu (20) est configuré pour transmettre directement au module de synchronisation (3) un débit de modèle de signal continu préconfiguré, qui fonctionne comme l'identificateur de débit de travail.

2. Système de détection selon la revendication 1, dans lequel le module de jugement de caractéristique de signal (1) comprend:
un module de séquencement (11), configuré pour générer un signal d'horloge;
un module de comptage (12), le module de comptage (12) est connecté au module de séquencement (11) et est configuré pour générer des résultats de comptage périodiques sur la base du signal d'horloge d'entrée et du signal de synchronisation pour fonctionner comme la caractéristique de signal;
un module de jugement (13), configuré pour générer l'identifiant de mode de synchronisation sur la base de la caractéristique de signal.

3. Système de détection selon la revendication 1, dans lequel le module de jugement de débit (2) comprend :
un module d'échantillonnage (21), configuré pour échantillonner le signal de synchronisation afin de former une donnée d'échantillonnage;
un module de décision (22), configuré pour générer une séquence PN sur la base de la donnée d'échantillonnage;
un module de détection (23), le module de détection (23) est connecté au module de décision (22) et est configuré pour générer l'identificateur de débit de travail sur la base de la séquence PN.

4. Système de détection selon la revendication 3, dans lequel le module de jugement de débit (2) comprend en outre:
un module de contrôle du gain (24), une borne d'entrée du module de contrôle de gain est configurée pour recevoir le signal de synchronisation, et une borne de sortie du module de contrôle de gain (24) est connectée à une borne d'entrée du module d'échantillonnage (1);
le module de contrôle de gain (24) étant configuré pour générer un paramètre de gain sur la base d'une amplitude de signal du signal de synchronisation et une plage d'échantillonnage prédéfinie correspondant à la plage d'échantillonnage du module d'échantillonnage (21);
le module de contrôle de gain (24) étant configuré pour ajuster une valeur de gain du signal de synchronisation en utilisant le paramètre de gain, et pour transmettre la valeur de gain au module d'échantillonnage.

5. Système de détection selon la revendication 3, dans lequel le module de jugement de débit (2) comprend en outre:
un module de génération d'horloge d'échantillonnage (25), configuré pour générer un signal d'horloge d'échantillonnage;
un module de rétablissement d'horloge (26), le module de rétablissement d'horloge (26) est connecté au module de génération d'horloge d'échantillonnage (25) et est configuré pour ajuster le signal d'horloge d'échantillonnage sur la base d'un paramètre d'échantillonnage optimal préconfiguré de manière à générer un signal d'horloge ajusté;
le module d'échantillonnage (21) configuré pour recevoir le signal d'horloge ajusté et pour échantillonner le signal de synchronisation sur la base du signal d'horloge ajusté afin d'obtenir les données d'échantillonnage.

6. Système de détection de la revendication 1, dans lequel le module de jugement de débit (2) comprend en outre:
un module d'égalisation (27), une borne d'entrée du module d'égalisation (27) est connectée au module d'échantillonnage (21), et une borne de sortie du module d'égalisation (27) est connectée au module de décision (22);
le module d'égalisation (27) étant configuré pour obtenir les données d'échantillonnage et pour éliminer une interférence inter-symboles des données d'échantillonnage afin de transmettre les données d'échantillonnage au module de décision (22).

7. Système de détection selon la revendication 6, dans lequel le module d'égalisation (27) comprend:
un égaliseur aval (271), l'égaliseur aval (271) est connecté au module d'échantillonnage (21) et est configuré pour obtenir les données d'échantillonnage, et
l'égaliseur aval élimine une interférence de symbole aval des données d'échantillonnage pour générer des données égalisées intermédiaires;
un filtre de rétroaction de décision (272), le filtre de rétroaction de décision (272) est connecté à l'égaliseur aval (271) et est configuré pour éliminer l'interférence de symbole arrière des données égalisées intermédiaires afin de produire les données égalisées intermédiaires qui fonctionnent comme les données d'échantillonnage avec l'interférence inter-symbole éliminée.

8. Système de détection selon la revendication 3, dans lequel le module de détection de signal continu (20) est également connecté respectivement au module d'échantillonnage (21), au module de décision (22) et au module de détection (23);
lorsque l'identificateur de mode de synchronisation indique qu'il s'agit d'un signal continu, le module de détection de signal continu (20) est en outre configuré pour commander le module d'échantillonnage (21), le module de décision (22) et le module de détection (23) afin qu'ils cessent le traitement du signal de synchronisation.

9. Système de détection selon la revendication 3, dans lequel le module de détection (23) comprend:
un module de génération de signal de référence (231), configuré pour générer séquentiellement des signaux de séquence de référence préconfigurés;
les signaux de séquence de référence correspondent au signal de synchronisation respectivement à différents débits de travail du dispositif Ethernet,
un module d'auto-corrélation (232), le module d'auto-corrélation (232) est connecté respectivement au module de génération de signal de référence (231) et au module de décision (22), et est configuré pour effectuer un traitement d'auto-corrélation glissante sur les signaux de séquence de référence et la séquence PN afin d'obtenir un résultat d'auto-corrélation;
un module de jugement de détection (233), le module de jugement de détection (233) est connecté respectivement au module de génération de signal de référence (231) et au module d'auto-corrélation (232), le module de jugement de détection (233) étant configuré pour déterminer si le débit de travail correspondant à la séquence PN est obtenu sur la base du résultat d'auto-corrélation,
si le débit de travail est obtenu, le module de jugement de détection (233) est configuré pour générer l'identificateur de débit de travail sur la base du débit de travail;
si le débit de travail n'est pas obtenu, le module de jugement de détection (233) est configuré pour commander le module de génération de signal de référence afin de générer de nouveaux signaux de séquence de référence.
